(19) Europäisches Patentamt
European Patent Office
Office européen des brevets

(11) **EP 3 600 641 B1**

(12) **FASCICULE DE BREVET EUROPÉEN**

(45) Date de publication et mention
de la délivrance du brevet:
**12.02.2025 Bulletin 2025/07**

(21) Numéro de dépôt: **18710903.8**

(22) Date de dépôt: **20.03.2018**

(51) Classification Internationale des Brevets (IPC):
**B01J 13/14** (2006.01)     **C08F 2/48** (2006.01)
**F28D 20/02** (2006.01)     **B01J 13/18** (2006.01)

(52) Classification Coopérative des Brevets (CPC):
**B01J 13/14; B01J 13/18; C08F 2/48;** F28D 20/023;
Y02E 60/14

(86) Numéro de dépôt international:
**PCT/EP2018/057028**

(87) Numéro de publication internationale:
**WO 2018/172360 (27.09.2018 Gazette 2018/39)**

(54) **PROCÉDÉ DE PRÉPARATION DE CAPSULES COMPRENANT AU MOINS UNE SUBSTANCE HYDROSOLUBLE OU HYDROPHILE ET CAPSULES OBTENUES**

VERFAHREN ZUR HERSTELLUNG VON KAPSELN MIT MINDESTENS EINER WASSERLÖSLICHEN ODER HYDROPHILEN SUBSTANZ UND DARAUS HERGESTELLTE KAPSELN

METHOD FOR PREPARING CAPSULES COMPRISING AT LEAST ONE WATER-SOLUBLE OR HYDROPHILIC SUBSTANCE AND CAPSULES OBTAINED THEREFROM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.03.2017 FR 1752331**

(43) Date de publication de la demande:
**05.02.2020 Bulletin 2020/06**

(73) Titulaire: **Calyxia**
**94380 Bonneuil-sur-Marne (FR)**

(72) Inventeurs:
• **DEMOULIN, Damien**
**94380 BONNEUIL-SUR-MARNE (FR)**
• **MOUSNIER, Ludivine**
**91140 Villebon Sur Yvette (FR)**
• **SADAOUI, Alicia**
**94700 Maisons Alfort (FR)**
• **WALTERS, Jamie**
**75005 Paris (FR)**

(74) Mandataire: **Lavoix**
**2, place d'Estienne d'Orves**
**75441 Paris Cedex 09 (FR)**

(56) Documents cités:
WO-A1-2005/002719     US-A1- 2004 234 738
US-A1- 2008 318 048     US-A1- 2009 289 216
US-A1- 2016 144 329     US-A1- 2016 145 459

**Description**

La présente invention a pour objet un procédé de préparation de capsules comprenant au moins une substance hydrosoluble ou hydrophile. Elle a également pour objet les capsules telles qu'obtenues ainsi que des compositions les contenant.

De nombreuses substances très hydrosolubles ou hydrophiles sont souvent ajoutées aux produits formulés afin de leur conférer des propriétés d'application intéressantes ou augmenter leurs performances. Dans certains cas, ces substances sont des molécules fragiles susceptibles d'être dégradées par suite d'interactions avec leur environnement par des mécanismes tels que l'hydrolyse, la dénaturation thermique ou l'oxydation, ce qui entraine une diminution des performances du produit formulé.

Dans d'autres cas, ces substances modifient fortement la force ionique du produit formulé, ce qui entraine des conséquences néfastes sur la stabilité du produit qui peut par exemple subir une rapide séparation de phases.

Dans d'autres cas encore, ces substances réagissent avec d'autres composants du produit formulé, ce qui entraine également des conséquences néfastes sur la stabilité ainsi qu'une diminution des performances.

L'encapsulation des substances hydrosolubles ou hydrophiles représente un moyen très intéressant pour pallier à la limitation de performance ou de stabilité des produits formulés qui les contiennent.

De très nombreuses capsules ont été développées afin de protéger et/ou isoler des principes actifs dans les produits formulés, et notamment des substances hydrosolubles ou hydrophiles. Ces capsules résultent de procédés de fabrication tels que l'atomisation (*spray-drying*), la polymérisation interfaciale, la précipitation interfaciale ou l'évaporation de solvant parmi de nombreux autres. L'enveloppe des capsules réalisées par ces procédés ne constitue pas une barrière suffisamment étanche à la diffusion de molécules aussi petites que les substances hydrosolubles ou hydrophiles dissoutes dans leur coeur ou aux espèces chimiques responsables de la dégradation des substances telles que le dioxygène ou l'eau. Ainsi, ces capsules résultent en une fuite relativement rapide des substances hydrosolubles ou hydrophiles qu'elles contiennent, accompagnée d'une dégradation rapide de ces substances une fois que les capsules sont dispersées dans le produit formulé.

Le document US 2004/234738 A1 divulgue un procédé de préparation de microcapsules solides. US 2009/289216 A1 divulgue des microcapsules solides.

La difficulté d'empêcher la diffusion de molécules aussi petites que des substances hydrosolubles ou hydrophiles ou des espèces chimiques responsables de la dégradation des substances fait qu'il n'existe pas à ce jour de capsule possédant des propriétés de protection et de rétention satisfaisantes des substances hydrosolubles ou hydrophiles.

La présente invention a donc pour but de fournir un procédé permettant d'encapsuler des substances hydrosolubles ou hydrophiles, voire très hydrosolubles ou hydrophiles, et ce en évitant les problèmes de contamination susmentionnés.

La présente invention a également pour but de fournir un procédé d'encapsulation par double émulsion permettant d'obtenir des capsules de taille contrôlée, notamment de taille inférieure à 20 $\mu$m, voire 5 $\mu$m.

La présente invention a également pour but de fournir des capsules contenant au moins une substance hydrosoluble ou hydrophile, voire très hydrosoluble ou hydrophile, présentant d'excellentes capacités de rétention.

La présente invention a également pour but de fournir des capsules contenant au moins une substance hydrosoluble ou hydrophile, voire très hydrosoluble ou hydrophile, présentant plusieurs barrières de protection, en particulier une barrière stérique, une barrière thermodynamique et une barrière physique.

Ainsi, la présente invention concerne un procédé de préparation de microcapsules solides comprenant les étapes suivantes :

a) la préparation d'une composition C1, comprenant au moins une substance hydrosoluble ou hydrophile dispersée dans une phase hydrophobe, ladite substance ayant une solubilité dans l'eau, mesurée à température ambiante à 25°C $\pm$ 2C°, et à pression ambiante à 0,1013 MPa (1 013 mbar), au moins égale à 1 g/L,

b) l'addition sous agitation de ladite composition C1 dans une composition polymérique C2, les compositions C1 et C2 n'étant pas miscibles l'une dans l'autre, ladite composition C1 étant à une température comprise entre 0°C et 100°C,

la composition C2 comprenant au moins un monomère ou polymère, au moins un agent réticulant, et éventuellement au moins un photoinitiateur ou un
catalyseur de réticulation, et étant à une température comprise entre 0°C et 100°C,
la viscosité de la composition C2 étant comprise entre 500 mPa.s et 100 000 mPa.s à 25°C, et étant de préférence supérieure à la viscosité de la composition C1,
ce par quoi on obtient une émulsion (E1) comprenant des gouttes de composition C1 dispersées dans la composition C2 ;

c) l'addition goutte à goutte sous agitation de l'émulsion (E1) dans une composition C3, les compositions C2 et C3 n'étant pas miscibles l'une dans l'autre, ladite émulsion (E1) étant à une température comprise entre 15°C et 60°C et ladite composition C3 étant à une température comprise entre 15°C et 60°C,

la viscosité de la composition C3 étant comprise entre 500 mPa.s et 100 000 mPa.s à 25°C, et étant de préférence supérieure à la viscosité de l'émulsion (E1),
ce par quoi on obtient une émulsion double (E2) comprenant des gouttes dispersées dans la composition C3 ;

d) l'application d'un cisaillement à l'émulsion (E2),
ce par quoi on obtient une émulsion double (E3) comprenant des gouttes de taille contrôlée dispersées dans la composition C3 ; et
e) la polymérisation de la composition C2, ce par quoi on obtient des microcapsules solides dispersées dans la composition C3,

les viscosités étant mesurées, pour une vitesse de cisaillement égale à 10 s$^{-1}$, au moyen d'un rhéomètre équipé d'un cône de diamètre 60 mm et d'angle 2 degrés, et d'une cellule de régulation en température réglée à 25°C.

Le procédé de l'invention permet donc de préparer des microcapsules solides comprenant un coeur et une enveloppe solide encapsulant totalement à sa périphérie le coeur, dans laquelle le coeur est une composition C1 comprenant au moins une substance hydrosoluble ou hydrophile dispersée dans une phase hydrophobe.

Les microcapsules obtenues selon le procédé de l'invention permettent avantageusement de protéger les substances hydrosolubles ou hydrophiles qu'elles contiennent de la dégradation par des espèces chimiques dégradantes provenant du milieu extérieur des capsules, selon 3 mécanismes différents :

- la diffusion vers l'intérieur de la capsule d'espèces chimiques causant la dégradation des substances hydrosolubles ou hydrophiles est avantageusement limitée par l'enveloppe rigide à haute densité de réticulation des capsules ;
- la phase hydrophobe du coeur constitue une barrière supplémentaire pour freiner la diffusion d'espèces dégradantes hydrophiles jusqu'aux substances hydrosolubles ou hydrophiles; et
- lorsque les substances hydrosolubles ou hydrophiles sont sous un état solide (i.e. par exemple sous forme de particules ou de cristal telles que décrites ci-après), cet état limite la quantité de matière en contact direct avec les espèces dégradantes : seule une couche extérieure se trouve directement en contact avec la phase hydrophobe qui contient les substances hydrosolubles ou hydrophiles. La diffusion d'espèces chimiques à l'intérieur d'un solide étant extrêmement ralentie par rapport à un liquide, les molécules des substances hydrosolubles ou hydrophiles, situées au centre des particules, se trouvent complètement isolées des espèces chimiques dégradantes.

Les capsules de l'invention sont particulièrement avantageuses en ce qu'elles présentent plusieurs barrières de rétention afin d'atteindre ce niveau de performance :

- une barrière stérique : de par leur taille, les substances hydrosolubles ou hydrophiles, en particulier sous forme solide, en particulier sous forme de particules et/ou sous forme d'un cristal, en particulier d'un sel, de préférence de taille moyenne inférieure à 1 $\mu$m, ne peuvent traverser les pores de l'enveloppe polymère rigide ;
- une barrière thermodynamique : la solubilité des substances hydrosolubles ou hydrophiles, dans la phase hydrophobe du coeur des capsules est négligeable, éliminant la possibilité pour les molécules des substances hydrosolubles ou hydrophiles, de se dissoudre dans le coeur puis de diffuser ainsi plus rapidement vers l'extérieur de la capsule ; et
- une barrière physique : l'enveloppe solide limite avantageusement la diffusion des espèces chimiques dissoutes vers l'extérieur de la capsule.

Le procédé de l'invention consiste à réaliser une double émulsion composée de gouttelettes d'une phase hydrophobe contenant les substances hydrosolubles ou hydrophiles, enveloppées d'une phase liquide réticulable. Ces doubles gouttes sont ensuite rendues monodisperses en taille avant d'être transformées par réticulation ou polymérisation en capsules rigides. La préparation implique 5 étapes décrites ci-après de façon détaillée.

*Etape a)*

L'étape a) du procédé selon l'invention consiste à préparer une composition C1 comprenant au moins une substance hydrosoluble ou hydrophile.

### Composition C1

La composition C1 est une dispersion et comprend au moins une substance hydrosoluble ou hydrophile, dispersée dans une phase hydrophobe.

Selon l'invention, on entend par « substance hydrosoluble ou hydrophile » une substance ayant une solubilité dans l'eau, mesurée à température ambiante, par exemple T=25°C $\pm$ 2°C, notamment à 25°C, et à pression ambiante, par exemple à 0,1013 MPa (1 013 mbar), au moins égale à 1 gramme/litre (g/L) (obtention d'une solution macroscopiquement isotrope et transparente, colorée ou non).

Cette solubilité est de préférence supérieure ou égale à 10 g/L, en particulier supérieure ou égale à 50 g/L, voire supérieure ou égale à 100 g/L.

Par ailleurs, la solubilité de la substance hydrosoluble ou hydrophile dans la phase hydrophobe est avantageusement inférieure à 20 g/L, de préférence inférieure à 10 g/L, et de manière préférée inférieure à 1 g/L.

Selon un mode de réalisation, la substance hydrosoluble ou hydrophile est sous un état (ou sous forme) solide en l'absence d'eau, à température ambiante, par exemple T=25°C $\pm$ 2°C, et à pression ambiante, par exemple 1 013 mbar (ou 0,1013 MPa), et en particulier est sous forme de particules et/ou sous forme d'un cristal, en particulier d'un sel, de préférence de taille moyenne inférieure à 1 $\mu$m .

Dans le cadre de la présente invention, le terme "taille" désigne le diamètre, notamment le diamètre moyen, des particules et/ou des cristaux.

Selon un mode de réalisation, parmi les substances hydrosolubles ou hydrophiles, on peut citer celles choisies dans le groupe constitué des composés suivants : l'acide ascorbique, en particulier l'acide L-ascorbique, et ses dérivés ou sels biologiquement compatibles, comme par exemple l'éthyl vitamine C ; les enzymes ; les antibiotiques ; les composants à effet tenseur ; les alpha-hydroxy acides et leurs sels ; les polyacides hydroxylés ; les sucroses et leurs dérivés ; l'urée ; les aminoacides ; les oligopeptides ; les extraits végétaux hydrosolubles, et de levures ; les hydrolysats de protéines ; l'acide hyaluronique ; les mucopolysaccharides ; les vitamines B1, B2, B3, B6, B12, H, PP ; le panthénol ; l'acide folique ; l'acide acétyl salicylique ; l'allantoïne ; l'acide glycyrrhétique ; l'acide kojique ; l'hydroquinone ; le dihydroxyacétone (ou DHA) ; l'EUK 134 (nom INCI : Ethylbisiminomethylguaiacol manganèse chloride) ; les catalyseurs organométalliques ou inorganométalliques de platine, de palladium, de titane, de moybdène, de cuivre ou de zinc ; les agents désinfectants et antibactériens et notamment les sels d'argent ; les agents azurants ou éclaircissants, les modificateurs de dispersibilité, les stabilisateurs, les agents détachants notamment listés dans US 6 335 315 et US 5 877 14 ; les composés utilisables au titre d'agents ignifuges ou retardateurs de flamme tels que les sels de bore, les hydrates d'aluminium ou les hydroxydes de magnésium, les composés utilisables au titre de matériaux à changement de phase (PCM pour Phase Change Materials) tels que le carbonate d'ammonium, le chlorure d'ammonium, le carbonate de césium, le sulfate de césium, le citrate de calcium, le chlorure de calcium, l'hydroxyde de calcium, le phosphate de calcium, le saccharate de calcium, le sulfate de calcium, le phosphate de cérium, le phosphate de fer, le carbonate de lithium, le sulfate de lithium, le chlorure de magnésium, le sulfate de magnésium, le chlorure de manganèse, le nitrate de manganèse, le sulfate de manganèse, l'acétate de potassium, le carbonate de potassium, le chlorure de potassium, le phosphate de potassium, le carbonate de rubidium, le sulfate de rubidium, le tétraborate de disodium, l'acétate de sodium, le bicarbonate de sodium, le bisulfate de sodium, le citrate de sodium, le chlorure de sodium, l'hydroxyde de sodium, le nitrate de sodium, le percarbonate de sodium, le persulfate de sodium, le phosphate de sodium, le propionate de sodium, le sélénite de sodium, le silicate de sodium, le sulfate de sodium, le tellurate de sodium, le thiosulfate de sodium, l'hydrophosphate de strontium, l'acétate de zinc, le chlorure de zinc, le thiosulfate de sodium, et les polyéthylène glycols.

Une composition C1 selon l'invention peut avantageusement comprendre de 0,1% à 40%, de préférence de 0,5% à 35%, en particulier de 1% à 30%, mieux de 5% à 25%, et mieux de 10% à 20%, en poids de substances hydrosoluble(s) ou hydrophile(s) par rapport au poids total de ladite composition C1.

Selon un mode de réalisation, pour une protection optimale, la phase hydrophobe de la composition C1 comprend des huiles ayant une polarité moyenne à faible tension interfaciale avec l'eau.

Selon un mode de réalisation préféré, la phase hydrophobe de la composition C1 comprend au moins une huile dont la tension interfaciale avec l'eau est comprise entre 25 mN/m et 50 mN/m. La tension interfaciale (ou tension de surface ou tension superficielle) est mesurée selon les méthodes classiques, notamment selon la méthode de la goutte pendante ou selon la méthode de l'anneau de Du Noüy. La technique de l'anneau de Du Noüy consiste à plonger un anneau de platine dans le liquide dont on cherche à mesurer la tension de surface puis à exercer une traction sur l'anneau vers l'interface liquide/air à température ambiante. Le tensiomètre va rechercher la force maximale à cette interface et la mesurer (figure k dans la demande FR 3 004 641). Cette force s'écrit Pm et ne s'obtient pas directement ; elle subit une correction selon la géométrie de l'anneau.

L'appareil calculera d'abord gs* appelé tension de surface mesurée. Elle s'obtient par la relation : gs* = Pm / [2p(Ri + Ro)] ; avec Ri et Ro les rayons respectivement intérieur et extérieur de l'anneau.

Puis, il en déduira gs d'après la relation : gs = gs*.F ; où F est le facteur correcteur dépendant de la densité du liquide ainsi que du rapport des diamètres de l'anneau. On effectue la manipulation avec un tensiomètre Krüss K12, le liquide est disposé dans un cristallisoir parfaitement nettoyé (cristallisoir de 46mm de diamètre ref GL5 de Kruss) et l'anneau est en platine irridié (ref R101 de Kruss). L'appareil donne directement la tension superficielle en mN/m.

De préférence, l'huile est choisie parmi les huiles végétales, animales ou de synthèse.

Ces huiles peuvent être de nature chimique différente telle que : des esters, des éthers, des alcanes, des alcools, des alcènes, des huiles végétales, d'origine naturelle ou synthétique, hydrocarbonés ou silicones, linéaires ou ramifiés, polymérisés ou non.

Parmi ces huiles, on peut citer par exemple l'huile de paraffine ou les polyalphaoléfines.

Lorsque la substance hydrosoluble ou hydrophile est sous une forme solide, en particulier sous forme de particules et/ou de cristaux, en particulier de taille moyenne inférieure à 1 $\mu$m, la composition C1 peut être préparée de plusieurs façons.

Une première technique consiste à créer des gouttelettes d'eau contenant le la substance hydrosoluble ou hydrophile sous forme dissoute, puis à évaporer l'eau.

Ainsi, selon un premier mode de réalisation, la composition C1 est préparée en dispersant, dans la phase hydrophobe, au moins une substance hydrosoluble ou hydrophile solide sous forme de poudre, obtenues notamment par atomisation.

L'atomisation (*spray-drying*) permet en effet d'obtenir des particules sous forme de poudre qui est ensuite dispersée dans la phase hydrophobe qui formera à terme le coeur des microcapsules selon l'invention.

Selon un autre mode de réalisation, la composition C1 est obtenue en préparant une nanoémulsion de gouttelettes d'eau dans la phase hydrophobe. Les nanoémulsions sont une classe d'émulsions qui présentent généralement une taille moyenne de gouttes en nombre inférieure ou égale à 1 $\mu$m, préférentiellement inférieure ou égale à 800 nm.

La nanoémulsion ainsi obtenue formera le coeur des capsules.

La nanoémulsion ainsi obtenue peut ensuite être séchée par agitation sous pression réduite et/ou chauffage ou bien encore par lyophilisation. Dans le cas d'un séchage par agitation sous pression réduite, la nanoémulsion, agitée au moyen d'un agitateur à hélice ou bien d'un barreau aimanté mis en mouvement par un agitateur magnétique, est placée dans une enceinte dont la pression est amenée au moyen d'une pompe à vide au-dessous de 0,01 MPa (100 mbar), de préférence au-dessous de 0,005 MPa (50 mbar), encore mieux au-dessous de 0,001 MPa (10 mbar), permettant ainsi d'évaporer l'eau des gouttelettes. Selon une variante du procédé, l'enceinte peut être munie d'une colonne de condensation pour maintenir la pression de vapeur de l'eau bien en-deçà de la pression de vapeur saturante. Dans le cas d'un séchage par chauffage, la nanoémulsion, agitée au moyen d'un agitateur à hélice ou bien d'un barreau aimanté mis en mouvement par un agitateur magnétique, est chauffée à une température comprise entre 30°C et 70°C, permettant ainsi d'évaporer l'eau des gouttelettes. Selon une variante du procédé, les séchages sous pression réduite et par chauffage peuvent être combinés si nécessaire. Dans le cas d'un séchage par lyophilisation, la nanoémulsion est introduite dans un lyophilisateur. Ce procédé consiste à congeler la nanoémulsion à une température de préférence supérieure à la température de solidification de la phase hydrophobe de la composition C1, puis à ôter l'eau par sublimation.

Une deuxième technique consiste à broyer une poudre grossière d'au moins au moins une substance hydrosoluble ou hydrophile solide pour obtenir des particules de la taille souhaitée puis à les disperser dans la phase hydrophobe qui formera à terme le coeur des capsules.

Ainsi, selon encore un autre mode de réalisation, la composition C1 est obtenue par broyage d'au moins une substance hydrosoluble ou hydrophile solide puis par dispersion de ladite substance broyée dans la phase hydrophobe.

### *Etape b)*

L'étape b) du procédé selon l'invention consiste à préparer une première émulsion (E1).

La première émulsion consiste en une dispersion de gouttelettes de la composition C1 dans une composition polymérique C2 immiscible avec C1, créée par addition goutte à goutte de C1 dans C2 sous agitation.

Pendant l'étape b), la composition C1 est à une température comprise entre 0°C et 100°C, de préférence entre 10°C et 80°C, et préférentiellement entre 15°C et 60°C. Pendant l'étape b), la composition C2 est à une température comprise entre 0°C et 100°C, de préférence entre 10°C et 80°C, et préférentiellement entre 15°C et 60°C.

Dans les conditions d'addition de l'étape b), les compositions C1 et C2 ne sont pas miscibles l'une dans l'autre, ce qui signifie que la quantité (en poids) de la composition C1 capable d'être solubilisée dans la composition C2 est inférieure ou égale à 5%, de préférence inférieure à 1%, et préférentiellement inférieure à 0,5%, par rapport au poids total de composition C2, et que la quantité (en poids) de la composition C2 capable d'être solubilisée dans la composition C1 est inférieure ou égale à 5%, de préférence inférieure à 1%, et préférentiellement inférieure à 0,5%, par rapport au poids total de composition C1.

Ainsi, lorsque la composition C1 entre en contact avec la composition C2 sous agitation, celle-ci est dispersée sous la forme de gouttes, dites gouttes simples.

La composition C2 est agitée de manière à former une émulsion comprenant des gouttes de composition C1 dispersées dans la composition C2. Cette émulsion est aussi appelée « émulsion simple » ou émulsion C1-dans-C2.

Pour mettre en oeuvre l'étape b), on peut utiliser tout type d'agitateur usuellement utilisé pour former des émulsions, comme par exemple un agitateur mécanique à pâles, un émulseur statique, un homogénéisateur à ultrasons, un homogénéisateur à membrane, un homogénéisateur à haute pression, un moulin colloïdal, un disperseur à haut pouvoir de cisaillement ou un homogénéisateur à haute vitesse.

La composition C1 est telle que définie précédemment.

***Composition C2***

La composition C2 est destinée à former la future enveloppe solide des microcapsules.

La fraction volumique de C1 dans C2 peut varier de 0,1 à 0,7 afin de contrôler l'épaisseur de l'enveloppe des capsules obtenues au terme du procédé.

Selon un mode de réalisation, le ratio entre le volume de composition C1 et le volume de composition C2 varie entre 1:10 et 10:1. De préférence, ce ratio est compris entre 1:3 et 5:1, préférentiellement entre 1:3 et 3:1.

De préférence, la viscosité de la composition C2 à 25°C est comprise entre 1 000 mPa.s et 50 000 mPa.s, préférentiellement entre 2 000 mPa.s et 25 000 mPa.s, et par exemple entre 3 000 mPa.s et 15 000 mPa.s.

De préférence, la viscosité de la composition C2 est supérieure à la viscosité de la composition C1.

La viscosité est mesurée au moyen d'un rhéomètre Haake Rheostress™ 600 équipé d'un cône de diamètre 60 mm et d'angle 2 degrés, et d'une cellule de régulation en température réglée à 25°C. La valeur de la viscosité est lue pour une vitesse de cisaillement égale à 10 s$^{-1}$.

Selon ce mode de réalisation, la cinétique de déstabilisation des gouttes de l'émulsion (E1) est significativement lente, ce qui permet à l'enveloppe des microcapsules d'être polymérisée pendant l'étape e) avant que l'émulsion ne se déstabilise. La polymérisation, une fois achevée, fournit alors une stabilisation thermodynamique. Ainsi, la viscosité relativement élevée de la composition C2 assure la stabilité de l'émulsion (E1) obtenue à l'issue de l'étape b).

De préférence, la tension interfaciale entre les compositions C1 et C2 est faible. Typiquement, ces tensions interfaciales varient entre 0 mN/m et 50 mN/m, de préférence entre 0 mN/m et 20 mN/m.

La faible tension interfaciale entre les compositions C1 et C2 permet également de façon avantageuse d'assurer la stabilité de l'émulsion (E1) obtenue à l'issue de l'étape b).

La composition C2 contient au moins un monomère ou polymère, au moins un agent réticulant, et éventuellement au moins un photoinitiateur ou catalyseur de réticulation, la rendant ainsi réticulable.

Selon un mode de réalisation, la composition C2 comprend de 50% à 99% en poids de monomère ou de polymère, ou un mélange de monomères ou polymères, par rapport au poids total de la composition C2.

Selon un mode de réalisation, la composition C2 comprend de 1% à 20% en poids d'agent réticulant ou d'un mélange d'agents réticulants, par rapport au poids total de la composition C2.

Selon un mode de réalisation, la composition C2 comprend de 0,1% à 5% en poids de photoinitiateur ou d'un mélange de photoinitiateurs, par rapport au poids total de la composition C2.

Selon un mode de réalisation, la composition C2 comprend de 0,001% à 70% en poids d'agent réticulant par rapport au poids de ladite composition C2.

Selon l'invention, le terme « monomère » ou « polymère » désigne toute unité de base adaptée pour la formation d'un matériau solide par polymérisation, soit seul soit en combinaison avec d'autres monomères ou polymères.

Ces monomères peuvent être choisis parmi les monomères comprenant au moins une fonction réactive choisie dans le groupe constitué des fonctions acrylate, méthacrylate, vinyl éther, N-vinyl éther, mercaptoester, thiolène, siloxane, époxy, oxétane, uréthane, isocyanate et peroxyde.

En particulier, les monomères peuvent être choisis parmi les monomères portant au moins une des fonctions réactives susmentionnées et portant en outre au moins une fonction choisie dans le groupe constitué des fonctions alkylamines primaires, secondaires et tertiaires, des fonctions amines quaternaires, des fonctions sulfate, sulfonate, phophate, phosphonate, carboxylate, hydroxyle, halogène, et leurs mélanges.

Les polymères utilisés dans la composition C2 peuvent être choisis parmi les polyéthers, polyesters, polyuréthanes, polyurées, polyéthylène glycols, polypropylène glycols, polyamides, polyacétals, polyimides, polyoléfines, polysulfures et les polydiméthylsiloxanes, lesdits polymères portant en outre au moins une fonction réactive choisie dans le groupe constitué des fonctions acrylate, méthacrylate, vinyl éther, N-vinyl éther, mercaptoester, thiolène, siloxane, époxy, oxétane, uréthane, isocyanate et peroxyde.

Parmi les exemples de tels polymères, on peut citer, mais de façon non limitative, les polymères suivants : poly(2-(1-naphthyloxy)-éthyl acrylate), poly(2-(2-naphthyloxy)-éthyl acrylate), poly(2-(2-naphthyloxy)-éthyl méthacrylate), polysorbitol diméthacrylate, polyacrylamide, poly((2-(1-naphthyloxy) éthanol), poly(2-(2-naphthyloxy) éthanol), poly(1-chloro-2,3-époxypropane), poly(n-butyl isocyanate), poly(N- vinyl carbazole), poly(N-vinyl pyrrolidone), poly(p-benzamide), poly(p-chlorostyrène), poly(p-méthyl styrène), poly(p-phénylène oxyde), poly(p-phénylène sulfure), poly(N-(méthacryloxyéthyl)succinimide), polybenzimidazol, polybutadiène, polybutylène téréphthalate, polychloral, polychloro trifluoro éthylène, polyéther imide, polyéther cétone, polyéther sulfone, polyhydridosilsesquioxane, poly(m-phénylène isophthalamide), poly(méthyl 2-acrylamido-2-méthoxyacéate), poly(2-acrylamido-2-méthylpropanesulfonique acide), poly-mono-butyl maléate, polybutylméthacrylate, poly(N-tert-butylméthacrylamide), poly(N-n-butylméthacrylamide), polycyclohexylméthacrylamide, poly(m-xylènebisacrylamide 2,3-diméthyl-1,3-butadiène,N,N-diméthylméthacrylamide), poly(n-butyl méthacrylate), poly(cyclohexyl méthacrylate), polyisobutyl méthacrylate, poly(4-cyclohexylstyrène), polycyclol acrylate, polycyclol méthacrylate, polydiéthyl éthoxyméthylènemalonate, poly(2,2,2-trifluoroéthyl méthacrylate), poly(1,1,1-triméthylolpropane triméthacrylate), polyméthacrylate, poly(N,N-diméthylaniline, dihydrazide), poly(dihydrazine isophthalique), polyacide isophthalique, polydiméthyl benzilketal, épichlorohydrine, poly(éthyl-3,3-diéthoxyacrylate), poly(éthyl-3,3-diméthylacrylate), poly(éthyl vinylcétone), poly(vinyl éthylcétone), poly(penten-3-one), polyformaldéhyde poly(diallyl acétal), polyfumaronitrile, polyglycéryl propoxy triacrylate, polyglycéryl triméthacrylate, polyglycidoxypropyltriméthoxysilane, polyglycidyl acrylate, poly(n-heptyl acrylate), poly(n-heptyl ester d'acide acrylique), poly(n-heptyl méthacrylate), poly(3-hydroxypropionitrile), poly(2-hydroxypropyl acrylate), poly(2-hydroxypropyl méthacrylate), poly(N-(méthacryloxyéthyl)phthalimide), poly(1,9-nonanediol diacrylate), poly(1,9-nonanediol diméthacrylate), poly(N-(n-propyl) acrylamide), poly(acide ortho-phthalique), poly(acide iso-phthalique), poly(acide 1,4-benzenedicarboxylique), poly(acide 1,3-benzenedicarboxylique), poly(acide phthalique), poly(mono-2-acryloxyéthyl ester), polyacide téréphthalique, polyanhydride phthalique, polyéthylène glycol diacrylate, polyéthylène glycol méthacrylate, polyéthylène glycol diméthacrylate, poly(isopropyl acrylate), polysorbitol pentaacrylate, polyvinyl bromoacétate, polychloroprène, poly(di-n-hexyl silylène), poly(di-n-propyl siloxane), polydiméthyl silylène, polydiphényl siloxane, polyvinyl propionate, polyvinyl triacétoxysilane, polyvinyl tris-tert-butoxysilane, polyvinyl butyral, polyalcool vinylique, polyacétate de vinyle, polyéthylène co-vinyl acétate, poly(bisphénol-A polysulfone), poly(1,3-dioxepane), poly(1,3-dioxolane), poly(1,4-phénylène vinylène), poly(2,6-diméthyl-1A-phénylène oxyde), poly(acide 4-hydroxybenzoique), poly(4-méthyl pentène-1), poly(4-vinyl pyridine), polyméthylacrylonitrile, polyméthylphénylsiloxane, polyméthylsilméthylène, polyméthylsilsesquioxane, poly(phénylsilsesquioxane), poly(pyromellitimide-1.4-diphényl éther), polytétrahydrofurane, polythiophène, poly(triméthylène oxyde), polyacrylonitrile, polyéther sulfone, polyéthylène-co-vinyl acétate, poly(perfluoréthylène propylène), poly(perfluoralkoxyl alcane), ou poly(styrène-acrylonitrile).

Par « agent réticulant », on entend un composé porteur d'au moins deux fonctions réactives susceptibles de réticuler un monomère ou un polymère, ou un mélange de monomères ou de polymères, lors de sa polymérisation.

L'agent réticulant peut être choisi parmi des molécules portant au moins deux fonctions choisies dans le groupe constitué des fonctions acrylate, méthacrylate, vinyl éther, N-vinyl éther, mercaptoester, thiolène, siloxane, époxy, oxétane, uréthane, isocyanate et peroxyde.

A titre d'agent réticulant, on peut notamment citer :

- les diacrylates, comme le 1,6-hexanediol diacrylate, le 1,6-hexanediol diméthacrylate, le polyéthylène glycol diméthacrylate, le 1,9-nonanediol diméthacrylate, le 1,4-butanediol diméthacrylate, le 2,2-bis(4-méthacryloxyphényl) propane, le 1,3-butanediol diméthacrylate, le 1,10-décanediol diméthacrylate, le bis(2-méthacryloxyéthyl) N,N'-1,9-nonylène biscarbamate, le 1,4-butanediol diacrylate, l'éthylène glycol diacrylate, le 1,5-pentanediol diméthacrylate, le 1,4-Phénylène diacrylate, l'allyl méthacrylate, le N,N'-méthylènebisacrylamide, le 2,2-bis[4-(2-hydroxy-3-méthacryloxypropoxy)phényl]propane, le tétraéthylène glycol diacrylate, l'éthylène glycol diméthacrylate, le diéthylène glycol diacrylate, le triéthylène glycol diacrylate, le triéthylène glycol diméthacrylate, le polyéthylène glycol diglycidyl éther, le N,N-diallylacrylamide, le 2,2-bis[4-(2-acryloxyéthoxy) phényl]propane, le glycidyl méthacrylate ;
- les acrylates multifonctionnels comme le dipentaérythritol pentaacrylate, le 1,1,1- triméthylolpropane triacrylate, le 1,1,1-triméthylolpropane triméthacrylate, l'éthylènediamine tétraméthacrylate, le pentaérythritol triacrylate, le pentaérythritol tétraacrylate ;
- les acrylates possédant également une autres fonction réactive, comme le propargyl méthacrylate, le 2-Cyanoéthyl acrylate, le tricyclodécane diméthanol diacrylate, l'hydroxypropyl méthacrylate, le N-acryloxysuccinimide, le N-(2-Hydroxypropyl)méthacrylamide, le N-(3-aminopropyl)méthacrylamide hydrochloride, le N-(t-BOC-aminopropyl)methacrylamide, le 2-aminoéthyl méthacrylate hydrochloride, le monoacryloxyéthyl phosphate, le o-nitrobenzyl méthacrylate, l'anhydride acrylique, le 2-(tert-butylamino)ethyl méthacrylate, le N,N-diallylacrylamide, le glycidyl méthacrylate, le 2-hydroxyéthyl acrylate, le 4-(2-acryloxyaéhoxy)-2-hydroxybenzophenone, le N-(Phthalimidométhyl) acrylamide, le cinnamyl méthacrylate.

Par « photoinitiateur », on entend un composé capable de se fragmenter sous l'effet d'un rayonnement lumineux.

Les photoinitiateurs utilisables selon la présente invention sont connus dans la technique et sont décrits, par exemple dans "Les photoinitiateurs dans la réticulation des revêtements", G. Li Bassi, Double Liaison - Chimie des Peintures, n°361, novembre 1985, p.34-41 ; "Applications industrielles de la polymérisation photoinduite", Henri Strub, L'Actualité Chimique, février 2000, p.5-13 ; et "Photopolymères : considérations théoriques et réaction de prise", Marc, J.M. Abadie, Double Liaison - Chimie des Peintures, n°435-436, 1992, p.28-34.

Ces photoinitiateurs englobent :

- les α-hydroxycétones, comme la 2-hydroxy-2-méthyl-1-phényl-1-propanone, commercialisées par exemple sous les dénominations DAROCUR® 1173 et 4265, IRGACURE® 184, 2959, et 500 par la société BASF, et ADDITOL® CPK par la société CYTEC ;
- les α-aminocétones, notamment la 2-benzyl-2-diméthylamino-1-(4-morpholinophényl)-butanone-1 , commercialisées par exemple sous les dénominations IRGACURE® 907 et 369 par la société BASF ;
- les cétones aromatiques commercialisées par exemple sous la dénomination ESACURE® TZT par LAMBERTI ; ou encore les thioxanthones commercialisées par exemple sous la dénomination ESACURE® ITX par LAMBERTI, et les quinones. Ces cétones aromatiques nécessitent le plus souvent la présence d'un composé donneur d'hydrogène tel que les amines tertiaires et notamment les alcanolamines. On peut notamment citer l'amine tertiaire ESACURE® EDB commercialisée par la société LAMBERTI.

- les dérivés α-dicarbonyles dont le représentant le plus courant est le benzyldiméthylcétal commercialisé sous la dénomination IRGACURE® 651 par BASF. D'autres produits commerciaux sont commercialisés par la société LAMBERTI sous la dénomination ESACURE® KB1, et
- les oxydes d'acylphosphine, tels que par exemple les oxydes de bis-acylphosphine (BAPO) commercialisés par exemple sous les dénominations IRGACURE® 819, 1700, et 1800, DAROCUR® 4265, LUCIRIN® TPO, et LUCIRIN® TPO-L par la société BASF.

Parmi les photoinitiateurs, on peut également mentionner les cétones aromatiques comme la benzophénone, les phénylglyoxylates, comme l'ester méthylique de l'acide phényl glyoxylique, les esters d'oxime, comme le [1-(4-phénylsulfanylbenzoyl)heptylidèneamino]benzoate, les sels de sulfonium, les sels d'iodonium et les oxime sulfonates.

Selon un mode de réalisation, la composition C2 peut en outre comprendre un monomère ou un polymère additionnel capable d'améliorer les propriétés de l'enveloppe des microcapsules et/ou de donner de nouvelles propriétés à l'enveloppe des microcapsules.

Parmi ces monomères ou polymères additionnels, on peut citer les monomères ou polymères portant un groupe sensible au pH, à la température, aux UV ou aux IR.

Ces monomères ou polymères additionnels peuvent induire la rupture des microcapsules solides et par la suite la libération de leur contenu, après une stimulation via le pH, la température, les UV ou les IR.

Ces monomères ou polymères additionnels peuvent être choisis parmi les monomères ou polymères portant au moins une fonction réactive choisie dans le groupe constitué des fonctions acrylate, méthacrylate, vinyl éther, N-vinyl éther, mercaptoester, thiolène, siloxane, époxy, oxétane, uréthane, isocyanate et peroxyde, et portant également l'un des groupes suivants :

- un groupe hydrophobe tel qu'un groupe fluoré, par exemple le trifluoroéthyl méthacrylate, le trifluoroéthyl acrylate, le tétrafluoropropyl méthacrylate, le pentafluoropropyl acrylate, le hexafluorobutyl acrylate, ou le fluorophényl isocyanate ;
- un groupe sensible au pH comme les amines primaires, secondaires ou tertiaires, les acides carboxyliques, les groupes phosphate, sulfate, nitrate, ou carbonate ;
- un groupe sensible aux UV ou clivable par UV (ou groupe photochromique) comme les groupes azobenzène, spiropyrane, 2-diazo-1,2-naphthoquinone, o-nitrobenzylé, thiol, ou 6-nitro-veratroyloxycarbonyle, par exemple poly(éthylène oxyde)-bloc-poly(2-nitrobenzylméthacrylate), et d'autres copolymères à blocs, comme décrit notamment dans Liu et al., Polymer Chemistry 2013, 4, 3431-3443 ;
- un groupe sensible aux IR ou clivable par IR comme le o-nitrobenzyle ou le 2-diazo-1,2-naphthoquinone, par exemple les polymères décrits dans Liu et al., Polymer Chemistry 2013, 4, 3431-3443 ; et
- un groupe sensible à la température comme le poly(N-isopropylacrylamide).

*Etape c)*

L'étape c) du procédé selon l'invention consiste à préparer une deuxième émulsion (E2).

La deuxième émulsion consiste en une dispersion de gouttelettes de la première émulsion dans une composition C3 immiscible avec C2, créée par addition goutte à goutte de l'émulsion (E1) dans C3 sous agitation.

Pendant l'étape c), l'émulsion (E1) est à une température comprise entre 15°C et 60°C. Pendant l'étape c), la composition C3 est à une température comprise entre 15°C et 60°C.

Dans les conditions d'addition de l'étape c), les compositions C2 et C3 ne sont pas miscibles l'une dans l'autre, ce qui signifie que la quantité (en poids) de la composition C2 capable d'être solubilisée dans la composition C3 est inférieure ou égale à 5%, de préférence inférieure à 1%, et préférentiellement inférieure à 0,5%, par rapport au poids total de composition C3, et que la quantité (en poids) de la composition C3 capable d'être solubilisée dans la composition C2 est inférieure ou égale à 5%, de préférence inférieure à 1%, et préférentiellement inférieure à 0,5%, par rapport au poids total de composition C2.

Ainsi, lorsque l'émulsion (E1) entre en contact avec la composition C3 sous agitation, celle-ci est dispersée sous la forme de gouttes, dites gouttes doubles, la dispersion de ces gouttes d'émulsion (E1) dans la phase continue C3 étant appelée émulsion (E2).

Typiquement, une goutte double formée pendant l'étape c) correspond à une goutte simple de composition C1 telle que décrite ci-dessus, entourée par une enveloppe de composition C2 qui encapsule totalement ladite goutte simple.

La goutte double formée pendant l'étape c) peut également comprendre au moins deux gouttes simples de composition C1, lesdites gouttes simples étant entourées par une enveloppe de composition C2 qui encapsule totalement lesdites gouttes simples.

Ainsi, lesdites gouttes doubles comprennent un coeur constitué d'une ou plusieurs gouttes simples de composition C1, et une couche de composition C2 entourant ledit coeur.

L'émulsion (E2) résultante est généralement une émulsion double polydisperse (émulsion C1-dans-C2-dans-C3 ou émulsion C1/C2/C3), ce qui signifie que les gouttes doubles n'ont pas une nette distribution de taille dans l'émulsion (E2).

L'immiscibilité entre les compositions C2 et C3 permet d'éviter le mélange entre la couche de composition C2 et la composition C3 et assure ainsi la stabilité de l'émulsion (E2).

L'immiscibilité entre les compositions C2 et C3 permet également d'empêcher la substance hydrosoluble ou hydrophile de la composition C1 de migrer du coeur des gouttes vers la composition C3.

Pour mettre en oeuvre l'étape c), on peut utiliser tout type d'agitateur usuellement utilisé pour former des émulsions, comme par exemple un agitateur mécanique à pâles, un émulseur statique, un homogénéisateur à ultrasons, un homogénéisateur à membrane, un homogénéisateur à haute pression, un moulin colloïdal, un disperseur à haut pouvoir de cisaillement ou un homogénéisateur à haute vitesse.

***Composition C3***

Selon un mode de réalisation, la viscosité de la composition C3 à 25°C est supérieure à la viscosité de l'émulsion (E1) à 25°C.

Selon l'invention, la viscosité de la composition C3 à 25°C est comprise entre 500 mPa.s et 100 000 mPa.s.

De préférence, la viscosité de la composition C3 à 25°C est comprise entre 3000 mPa.s et 100 000 mPa.s, préférentiellement entre 5 000 mPa.s et 80 000 mPa.s, par exemple entre 7 000 mPa.s et 70 000 mPa.s.

Selon ce mode de réalisation, étant donné la viscosité très élevée de la phase continue formée par la composition C3, la vitesse de déstabilisation des gouttes doubles de l'émulsion (E2) est significativement lente par rapport à la durée du procédé de l'invention, ce qui fournit alors une stabilisation cinétique des émulsions (E2) puis (E3) jusqu'à ce que la polymérisation de l'enveloppe des capsules ne soit achevée. Les capsules une fois polymérisées sont stables thermodynamiquement.

Ainsi, la viscosité très élevée de la composition C3 assure la stabilité de l'émulsion (E2) obtenue à l'issue de l'étape b).

La haute viscosité de la composition C3 permet d'assurer avantageusement la stabilité cinétique de la double émulsion (E2), l'empêchant de se déphaser pendant la durée du procédé de fabrication.

De préférence, la tension interfaciale entre les compositions C2 et C3 est faible. La faible tension interfaciale entre les compositions C2 et C3 permet également de façon avantageuse d'assurer la stabilité de l'émulsion (E2) obtenue à l'issue de l'étape c).

La fraction volumique de première émulsion (E1) dans C3 peut être variée de 0,05 à 0,5 afin d'une part d'améliorer le rendement de production et d'autre part de faire varier le diamètre moyen des capsules. A la fin de cette étape, la distribution de taille de la seconde émulsion est relativement large.

Selon un mode de réalisation, le ratio entre le volume d'émulsion (E1) et le volume de composition C3 varie entre 1:10 et 10:1. De préférence, ce ratio est compris entre 1:9 et 3:1, préférentiellement entre 1:9 et 1:1.

Selon un mode de réalisation, la composition C3 comprend en outre au moins un polymère branché, de préférence de poids moléculaire supérieur à 5 000 g.mol$^{-1}$, et/ou au moins un polymère de poids moléculaire supérieur à 5 000 g.mol$^{-1}$, et/ou des particules solides telles que des silicates.

Selon un mode de réalisation, la composition C3 comprend au moins un polymère branché, de préférence de poids moléculaire supérieur à 5 000 g.mol$^{-1}$, préférentiellement entre 10 000 g.mol$^{-1}$ et 500 000 g.mol$^{-1}$, par exemple entre 50 000 g.mol$^{-1}$ et 300 000 g.mol$^{-1}$.

Par « polymère branché » (ou polymère ramifié), on entend un polymère présentant au moins un point de ramification entre ses deux groupes terminaux, un point de ramification (aussi appelé point de branchement) étant un point d'une chaîne sur lequel est fixée une chaîne latérale aussi appelée branche ou chaîne pendante.

Parmi les polymères branchés, on peut par exemple citer les polymères greffés, en peigne ou encore les polymères en étoile ou les dendrimères.

Selon un mode de réalisation, la composition C3 comprend au moins un polymère de poids moléculaire supérieur à 5 000 g.mol$^{-1}$, préférentiellement entre 10 000 g.mol$^{-1}$ et 500 000 g.mol$^{-1}$, par exemple entre 50 000 g.mol$^{-1}$ et 300 000 g.mol$^{-1}$.

A titre de polymère utilisable dans la composition C3, on peut citer les composés suivants, utilisés seuls ou bien mélangés entre eux :

- les dérivés de cellulose, tels que les éthers de cellulose : le méthyl cellulose, l'éthyl cellulose, l'hydroxyéthyl cellulose, le méthylhydroxyéthyl cellulose, l'éthylhydroxyéthyl cellulose, le carboxyméthyl cellulose, l'hydroxypropyl cellulose ou le méthylhydroxypropyl cellulose ;
- les polyacrylates (encore appelés carbomères), tels que l'acide polyacrylique (PAA), l'acide polyméthacrylique (PMAA), le poly(hydroxyéthyl méthacrylate) (pHEMA), le poly(N-2-hydroxypropyl méthacrylate) (pHPMA) ;
- les polyacrylamides tels que le poly(N-isopropylacrylamide) (PNIPAM) ;
- le polyvinylpyrrolidone (PVP) et ses dérivés ;
- l'alcool polyvinylique (PVA) et ses dérivés ;
- le poly(éthylène glycol), le poly(propylène glycol) et leurs dérivés, tels que le poly(éthylène glycol) acrylate/méthacrylate, le poly(éthylène glycol) diacrylate/diméthacrylate, le polypropylène carbonate ;
- les polysaccharides tels que les carraghénanes, les gommes de caroube ou gommes tara, le dextran, les gommes xanthanes, le chitosane, l'agarose, les acides hyaluroniques, la gomme gellane, la gomme de guar, la gomme arabique, la gomme adragante, la gomme diutane, la gomme d'avoine, la gomme karaya, la gomme ghatti, la gomme curdlan, la pectine, la gomme konjac, l'amidon ;
- les dérivés protéinés tels que la gélatine, le collagène, la fibrine, la polylysine, l'albumine, la caséine ;
- les dérivés de silicone tels que le polydimethylsiloxane (aussi appelé diméthicone), les alkyl silicones, les aryl silicones, les alkyl aryl silicones, les polyéthylène glycol diméthicones, les polypropylène glycol diméthicone ;
- les cires, telles que les cires diester (diesters d'alcanediol, diesters d'hydroxylacides), les cires triester (triacylglycérols, triesters d'alcane-1,2-diol, de ω-hydroxy acide et d'acide gras, esters d'acide hydroxymalonique, d'acide gras et d'alcool, triesters d'hydroxylacides, d'acide gras et d'alcool gras, triesters d'acide gras, d'hydroxylacide et de diol) et les cires polyesters (polyesters d'acides gras). Les esters d'acides gras utilisables à titre de cires dans le cadre de l'invention sont par exemple le palmitate de cétyle, l'octanoate de cétyle, le laurate de cétyle, le lactate de cétyle, l'isononanoate de cétyle, le stéarate de cétyle, le stéarate de stéaryle, le stéarate de myristyle, le myristate de cétyle, le stéarate d'isocétyle, le trimyristate de glycéryle, le tripalmitate de glycéryle, le monostéarate de glycéryle ou le palmitate de glycéryle et de cétyle ;
- les acides gras utilisables comme cires tels que l'acide cérotique, l'acide palmitique, l'acide stéarique, l'acide dihydroxystéarique, l'acide béhénique, l'acide lignocérique, l'acide arachidique, l'acide myristique, l'acide laurique, l'acide tridécyclique, l'acide pentadécyclique, l'acide margarique, l'acide nonadécyclique, l'acide hénéicosylique, l'acide tricosylique, l'acide pentacosylique, l'acide heptacosylique, l'acide montanique ou l'acide nonacosylique ;
- les sels d'acide gras notamment les sels d'aluminium d'acide gras tels que l'aluminium stéarate, l'hydroxyl aluminium bis(2-éthylhexanoate) ;
- l'huile de jojoba isomérisée ;
- l'huile de tournesol hydrogénée ;
- l'huile de coprah hydrogénée ;
- l'huile de lanoline hydrogénée ;
- l'huile de ricin et ses dérivés, notamment l'huile de ricin hydrogénée modifiée ou les composés obtenus par estérification d'huile de ricin avec des alcools gras ;
- les polyuréthanes et leurs dérivés ;
- les polymères styréniques tels que le styrène butadiène ;
- les polyoléfines telles que le polyisobutène.

Selon un mode de réalisation, la composition C3 comprend des particules solides telles que des argiles, des silices et des silicates.

A titre de particules solides utilisables dans la composition C3, on peut citer les argiles et silicates appartenant notamment à la catégorie des phyllosilicates (encore appelées silices en feuillets). A titre d'exemple de silicate utilisable dans le cadre de l'invention, on peut citer la Bentonite, l'Hectorite, l'Attapulgite, la Sepiolite, la Montmorillonite, la Saponite, la Sauconite, la Nontronite, la Kaolinite, le Talc, la Sepiolite, la Craie. Les silices synthétiques pyrogénées peuvent également être utilisées. Les argiles, silicates et silices citées précédemment peuvent avantageusement être modifiées par des molécules organiques telles que des polyéthers, des amides éthoxylées, des sels d'ammonium quaternaires, des diamines à longue chaîne, des esters à longue chaîne, des polyéthylène glycols, des polypropylène glycols.

Ces particules peuvent être utilisées seules ou mélangées entre elles.

Selon un mode de réalisation, la composition C3 comprend au moins un polymère de poids moléculaire supérieur à 5 000 g.mol$^{-1}$ et des particules solides. Tout mélange des composés cités précédemment peut être utilisé.

## Etape d)

L'étape d) du procédé selon l'invention consiste à affiner la taille des gouttes de la deuxième émulsion (E2).

Cette étape peut consister à appliquer un cisaillement contrôlé homogène à l'émulsion (E2), ladite vitesse de cisaillement appliquée étant comprise entre 10 s$^{-1}$ et 100 000 s$^{-1}$.

Selon un mode de réalisation, les doubles gouttes polydisperses obtenues à l'étape c) sont soumises à un affinage en taille consistant à leur faire subir un cisaillement capable de les fragmenter en nouvelles doubles gouttes de diamètres homogènes et contrôlés. De préférence, cette étape de fragmentation est effectuée à l'aide d'une cellule à haut cisaillement de type Couette selon un procédé décrit dans la demande de brevet EP 15 306 428.2.

Selon un mode de réalisation, dans l'étape d), la deuxième émulsion (E2), obtenue à l'issue de l'étape c), consistant en des doubles gouttes polydisperses dispersées dans une phase continue, est soumise à un cisaillement dans un mélangeur, qui applique un cisaillement contrôlé homogène.

Ainsi, selon ce mode de réalisation, l'étape d) consiste à appliquer un cisaillement contrôlé homogène à l'émulsion (E2), ladite vitesse de cisaillement appliquée étant comprise entre 1 000 s$^{-1}$ et 100 000 s$^{-1}$.

Selon ce mode de réalisation, dans un mélangeur, la vitesse de cisaillement est dite contrôlée et homogène, indépendamment de la durée, lorsqu'elle passe à une valeur maximale identique pour toutes les parties de l'émulsion, à un instant donné qui peut varier d'un point de l'émulsion à un autre. La configuration exacte du mélangeur n'est pas essentielle selon l'invention, du moment que l'émulsion entière a été soumise au même cisaillement maximal en sortant de ce dispositif. Les mélangeurs adaptés pour effectuer l'étape d) sont notamment décrits dans le document US 5 938 581.

La deuxième émulsion peut subir un cisaillement contrôlé homogène lorsqu'elle circule à travers une cellule formée par :

- deux cylindres rotatifs concentriques (également appelé mélangeur de type Couette) ;
- deux disques rotatifs parallèles ; ou
- deux plaques oscillantes parallèles.

Selon ce mode de réalisation, la vitesse de cisaillement appliquée à la deuxième émulsion est comprise entre 1 000 s$^{-1}$ et 100 000 s$^{-1}$, de préférence entre 1 000 s$^{-1}$ et 50 000 s$^{-1}$, et préférentiellement entre 2 000 s$^{-1}$ et 20 000 s$^{-1}$.

Selon ce mode de réalisation, pendant l'étape d), la deuxième émulsion est introduite dans le mélangeur et est ensuite soumise à un cisaillement qui résulte en la formation de la troisième émulsion. La troisième émulsion (E3) est chimiquement identique à la deuxième émulsion (E2) mais consiste en des gouttes doubles monodisperses alors que l'émulsion (E2) consiste en des gouttes doubles polydisperses. La troisième émulsion (E3) consiste typiquement en une dispersion de gouttes doubles comprenant un coeur constitué d'une ou plusieurs gouttes de composition C1 et d'une couche de composition C2 encapsulant ledit coeur, lesdites gouttes doubles étant dispersées dans la composition C3.

La différence entre la deuxième émulsion et la troisième émulsion est la variance de taille des gouttes doubles : les gouttes de la deuxième émulsion sont polydisperses en taille alors que les gouttes de la troisième émulsion sont monodisperses, grâce au mécanisme de fragmentation décrit ci-dessus.

De préférence, selon ce mode de réalisation, la deuxième émulsion est introduite de façon continue dans le mélangeur ce qui signifie que la quantité d'émulsion double (E2) introduite à l'entrée du mélangeur est la même que la quantité de troisième émulsion (E3) à la sortie du mélangeur.

Etant donné que la taille des gouttes de l'émulsion (E3) correspond essentiellement à la taille des gouttes des microcapsules solides après polymérisation, il est possible d'ajuster la taille des microcapsules et l'épaisseur de l'enveloppe en ajustant la vitesse de cisaillement pendant l'étape d), avec une forte corrélation entre la diminution de la taille des gouttes et l'augmentation de la vitesse de cisaillement. Ceci permet d'ajuster les dimensions résultantes des microcapsules en faisant varier la vitesse de cisaillement appliquée pendant l'étape d).

Selon un mode de réalisation préféré, le mélangeur mis en oeuvre pendant l'étape d) est un mélangeur de type Couette, comprenant deux cylindres concentriques, un cylindre externe de rayon interne $R_o$ et un cylindre interne de rayon externe $R_i$, le cylindre externe étant fixe et le cylindre interne étant en rotation avec une vitesse angulaire $\omega$.

Un mélangeur de type Couette adapté pour le procédé de l'invention peut être fourni par la société T.S.R. France.

Selon un mode de réalisation, la vitesse angulaire $\omega$ du cylindre interne en rotation du mélangeur de type Couette est supérieure ou égale à 30 rad.s$^{-1}$.

Par exemple, la vitesse angulaire $\omega$ du cylindre interne en rotation du mélangeur de type Couette est d'environ 70 rad.s$^{-1}$.

Les dimensions du cylindre externe fixe du mélangeur de type Couette peuvent être choisies pour moduler

l'espace (d = R$_o$ - R$_i$) entre le cylindre interne en rotation et le cylindre externe fixe.

Selon un mode de réalisation, l'espace (d = R$_o$ - R$_i$) entre les deux cylindres concentriques du mélangeur de type Couette est compris entre 50 μm et 1 000 μm, de préférence entre 100 μm et 500 μm, par exemple entre 200 μm et 400 μm.

Par exemple, la distance d entre les deux cylindres concentriques est égale à 100 μm.

Selon ce mode de réalisation, pendant l'étape d), la deuxième émulsion est introduite à l'entrée du mélangeur, typiquement via une pompe, et est dirigée vers l'espace entre les deux cylindres concentriques, le cylindre externe étant fixe et le cylindre interne étant en rotation à une vitesse angulaire ω.

Lorsque l'émulsion double est dans l'espace entre les deux cylindres, la vitesse de cisaillement appliquée à ladite émulsion est donnée par l'équation suivante :

$$\gamma = \frac{R_i \omega}{(R_o - R_i)}$$

dans laquelle :

- ω est la vitesse angulaire du cylindre interne en rotation,
- R$_o$ est le rayon interne du cylindre externe fixe, et
- R$_i$ est le rayon externe du cylindre interne en rotation.

Selon un autre mode de réalisation, lorsque la viscosité de la composition C3 est supérieure à 2 000 mPa.s à 25°C, l'étape d) consiste à appliquer à l'émulsion (E2) une vitesse de cisaillement inférieure à 1 000 s$^{-1}$.

Selon ce mode de réalisation, l'étape de fragmentation d) peut être effectuée à l'aide de tout type de mélangeur usuellement utilisé pour former des émulsions avec une vitesse de cisaillement inférieure à 1 000 s$^{-1}$, auquel cas la viscosité de la composition C3 est supérieure à 2 000 mPa.s, à savoir dans des conditions telles que celles décrites dans la demande de brevet FR 16 61787.

Les caractéristiques géométriques des doubles gouttes formées à la fin de cette étape dicteront celles des futures capsules.

Selon ce mode de réalisation, dans l'étape d), l'émulsion (E2), constituée de gouttes polydisperses dispersées dans une phase continue, est soumise à un cisaillement, par exemple dans un mélangeur, à une faible vitesse de cisaillement, à savoir inférieure à 1 000 s$^{-1}$.

Selon ce mode de réalisation, la vitesse de cisaillement appliquée à l'étape d) est par exemple comprise entre 10 s$^{-1}$ et 1 000 s$^{-1}$.

De préférence, la vitesse de cisaillement appliquée à l'étape d) est strictement inférieure à 1 000 s$^{-1}$.

Selon ce mode de réalisation, les gouttes d'émulsion (E2) ne peuvent être fragmentées efficacement en des gouttes fines et monodisperses d'émulsion (E3) que si une contrainte de cisaillement élevée leur est appliquée.

La contrainte de cisaillement σ appliquée à une goutte d'émulsion (E2) est définie comme la force tangentielle par unité de surface de goutte résultant du cisaillement macroscopique appliqué à l'émulsion lors de son agitation au cours de l'étape d).

La contrainte de cisaillement σ (exprimée en Pa), la viscosité de la composition C3 η (exprimée en Pa s) et la vitesse de cisaillement γ (exprimée en s$^{-1}$) appliquée à l'émulsion (E2) lors de son agitation au cours de l'étape d) sont reliées par l'équation suivante :

$$\sigma = \eta\gamma$$

Ainsi, selon ce mode de réalisation, la viscosité élevée de la composition C3 permet d'appliquer une très haute contrainte de cisaillement aux gouttes d'émulsion (E2) dans le mélangeur, même si la vitesse de cisaillement est faible et le cisaillement inhomogène.

Pour mettre en oeuvre l'étape d) selon ce mode de réalisation, on peut utiliser tout type d'agitateur usuellement utilisé pour former des émulsions, comme par exemple un agitateur mécanique à pâles, un émulseur statique, un homogénéisateur à ultrasons, un homogénéisateur à membrane, un homogénéisateur à haute pression, un moulin colloïdal, un disperseur à haut pouvoir de cisaillement ou un homogénéisateur à haute vitesse.

Selon un mode de réalisation préféré, on utilise un émulseur simple tel qu'un agitateur mécanique à pâles ou un émulseur statique pour mettre en oeuvre l'étape d). En effet, ceci est possible car ce mode de réalisation ne requiert ni un cisaillement contrôlé ni un cisaillement plus grand que 1 000 s$^{-1}$.

*Etape e)*

L'étape e) du procédé de l'invention consiste en la réticulation et donc la formation de l'enveloppe des microcapsules solides selon l'invention.

Cette étape permet à la fois d'atteindre les performances attendues de protection et de rétention des capsules et d'assurer leur stabilité thermodynamique, en empêchant définitivement tout mécanisme de déstabilisation comme la coalescence ou le mûrissement.

Selon un mode de réalisation, lorsque la composition C2 comprend un photoinitiateur, l'étape e) est une étape de photopolymérisation consistant à exposer l'émulsion (E3) à une source de lumière apte à initier la photopolymérisation de la composition C2, notamment à une source de lumière UV émettant de préférence dans la gamme de longueur d'onde comprise entre 100 nm et 400 nm, et ce en particulier pendant une durée inférieure à 15 minutes.

Selon ce mode de réalisation, l'étape e) consiste à soumettre l'émulsion (E3) à une photopolymérisation, ce qui va permettre la photopolymérisation de la composition C2. Cette étape va permettre d'obtenir des microcapsules encapsulant la substance hydrosoluble tel que définie ci-dessus.

Selon un mode de réalisation, l'étape e) consiste à exposer l'émulsion (E3) à une source de lumière apte à initier la photopolymérisation de la composition C2.

De préférence, la source de lumière est une source de lumière UV.

Selon un mode de réalisation, la source de lumière UV émet dans la gamme de longueur d'onde comprise entre 100 nm et 400 nm.

Selon un mode de réalisation, l'émulsion (E3) est exposée à une source de lumière pendant une durée inférieure à 15 minutes, et de préférence pendant 5 à 10 minutes.

Pendant l'étape e), l'enveloppe des gouttes doubles susmentionnées, constituée de composition C2 photoréticulable, est réticulée et ainsi convertie en une enveloppe polymérique viscoélastique, encapsulant et protégeant la substance hydrosoluble de sa libération en l'absence d'un déclenchement mécanique.

Selon un autre mode de réalisation, lorsque la composition C2 ne comprend pas de photoinitiateur, l'étape e) est une étape de polymérisation, sans exposition à une source de lumière, la durée de cette étape e) de polymérisation étant de préférence comprise entre 8 heures et 100 heures et/ou cette étape e) étant réalisée à une température comprise entre 20°C et 80°C.

Selon ce mode de réalisation, la polymérisation est initiée par exemple par exposition à la chaleur (initiation thermique), ou par la simple mise en contact des monomères, polymères et agents réticulants entre eux, ou avec un catalyseur. Le temps de polymérisation est alors généralement supérieur à plusieurs heures.

De préférence, l'étape e) de polymérisation de la composition C2 est effectuée pendant une durée comprise entre 8 heures et 100 heures, à une température comprise entre 20°C et 80°C.

La composition obtenue à l'issue de l'étape e), comprenant des microcapsules solides dispersées dans la composition C3, est prête à l'emploi et peut être utilisée sans qu'aucune étape supplémentaire de post-traitement des capsules ne soit requise.

L'épaisseur de l'enveloppe des microcapsules ainsi obtenues est typiquement comprise entre 0,1 $\mu$m et 20 $\mu$m, de préférence entre 0,2 $\mu$m et 10 $\mu$m, préférentiellement entre 0,2 $\mu$m et 8 $\mu$m.

Selon un mode de réalisation, les microcapsules solides obtenues à l'issue de l'étape e) sont dépourvues de tensioactif, en particulier au niveau de l'interface entre l'enveloppe solide et le milieu extérieur (ou phase continue) représenté par la composition C3.

Le procédé de l'invention présente l'avantage de ne pas nécessiter de tensioactif, dans aucune des étapes b) à e) de formation de l'enveloppe des microcapsules solides. Le procédé de l'invention permet ainsi de réduire la présence d'additifs qui pourraient modifier les propriétés du produit final obtenu après libération de la substance hydrosoluble.

La présente invention concerne également une série (ou ensemble) de microcapsules solides, susceptible d'être obtenue selon le procédé tel que défini ci-dessus, dans laquelle chaque microcapsule comprend :

- un coeur comprenant une composition C1 telle que définie ci-dessus, comprenant au moins une substance hydrosoluble ou hydrophile dispersée dans une phase hydrophobe, la substance hydrosoluble ou hydrophile étant sous forme solide à température ambiante et pression atmosphérique, et
- une enveloppe solide encapsulant totalement à sa périphérie le coeur, ladite enveloppe solide étant obtenue de la composition C2 telle que définie dans la revendication 1, ladite composition C2 comprenant au moins un monomère ou polymère, au moins un agent réticulant, et éventuellement au moins un photoinitiateur ou un catalyseur de réticulation, et étant à une température comprise entre 0°C et 100°C,

dans laquelle le diamètre moyen desdites microcapsules est compris entre 1 $\mu$m et 30 $\mu$m, l'épaisseur de l'enveloppe rigide est comprise entre 0,1 $\mu$m et 20 $\mu$m et l'écart-type de la distribution du diamètre des microcapsules est inférieur à 50%, en particulier inférieur à 25%, ou inférieur à 1 $\mu$m, la distribution de taille des microcapsules solides étant mesurée par technique de diffusion de la lumière comme défini dans la description.

Comme indiqué ci-dessus, le procédé de l'invention permet d'obtenir des particules monodisperses. Aussi, la série de microcapsules solides susmentionnée est formée d'une population de particules monodisperses en taille. Ainsi, l'écart type de la distribution du diamètre des microcapsules est inférieur à 50%, en particulier inférieur à 25%, ou inférieur à 1 $\mu$m.

La distribution de taille des microcapsules solides peut être mesurée par technique de diffusion de la lumière à l'aide d'un Mastersizer 3000 (Malvern Instruments) équipé d'une cellule de meure Hydro SV.

Selon l'invention, les microcapsules solides susmentionnées comprennent une enveloppe solide entièrement composés de polymère réticulé (obtenu à partir de la composition C2).

Comme indiqué ci-dessus, le procédé de l'invention permet d'obtenir des microcapsules solides. La présente demande décrit également des microcapsules solides comprenant un coeur et une enveloppe solide encapsulant totalement à sa périphérie le coeur, dans laquelle le coeur est une composition C1 telle que définie ci-dessus, dispersée dans une phase hydrophobe, et dans laquelle ladite enveloppe rigide est constituée de polymère réticulé, le diamètre de ladite microcapsule étant compris entre 1 $\mu$m et 30 $\mu$m et l'épaisseur de l'enveloppe rigide étant comprise entre 0,1 $\mu$m et 20 $\mu$m.

La présente invention concerne également une composition comprenant une série de microcapsules solides telle que définie ci-dessus.

Les capsules de l'invention peuvent avantageusement être utilisées afin de protéger les principes actifs utilisés dans les formulations de polymère, d'élastomère, de caoutchouc, de peinture, d'adhésif, de joint, de mortier, de papier, de vernis ou de revêtement ; dans les produits de chimie de synthèse ; dans les lessives, les produits de détergence, de soin du linge et de soin de la maison ; dans les produits agrochimiques tels que les fertilisants, les herbicides, les insecticides, les fongicides ou les pesticides ; les textiles ; les produits de pétrochimie tels que les lubrifiants, les carburants, les bitumes, les fluides de forage et de stimulation des puits.

La présente demande décrit également un procédé de libération d'une substance hydrosoluble ou hydrophile, en particulier sous forme solide à température ambiante et pression atmosphérique, en particulier sous forme de particules et/ou sous forme d'un cristal, en particulier d'un sel, de préférence de taille moyenne inférieure à 1 $\mu$m, comprenant une étape d'application d'une contrainte de cisaillement mécanique à une composition comprenant une série de microcapsules solides telle que définie ci-dessus.

Les expressions « compris entre ... et ... », « compris de ... à ... » et « allant de ... à ... » doivent se comprendre bornes incluses, sauf si le contraire est spécifié.

Les exemples qui suivent illustrent la présente invention sans en limiter la portée.

## EXEMPLES

### Exemple 1 : Fabrication de capsules solides selon l'invention

Un agitateur mécanique (Ika Eurostar 20) équipé d'une hélice d'agitation de type défloculeuse est utilisé pour réaliser toutes les étapes d'agitation.

### *Etape a) : Création de la dispersion de particules (composition C1) par voie de nanoémulsion*

|   |   | Matières premières | % |
|---|---|---|---|
| Composition A | | Huile de paraffine | 48 |
| | | Abil Em 90 (Cetyl PEG/PPG-10/1 Dimethicone, Evonik) | 2 |
| Composition B | | Chlorure de Calcium | 5 |
| | | Eau déionisée | 45 |
| Total | | | 100 |

La composition A est placée sous agitation à 1 000 tpm jusqu'à complète homogénéisation.

La composition B est placée sous agitation à 1 000 tpm jusqu'à complète homogénéisation.

La composition B est ensuite ajoutée goutte à goutte à la composition A sous agitation à 2 000 tpm. L'agitation est maintenue pendant 5 minutes après l'addition puis soumise à sonication (Vibra-cell 75042, Sonics) pendant 3 minutes (pulse 5s/2s) pendant 3 minutes à amplitude 30%.

La nanoémulsion obtenue est ensuite placée sous pression réduite et chauffage (25 mbar, 40°C) jusqu'à évaporation complète de l'eau. On obtient ainsi la composition C1.

*Etape b) : Préparation de la première émulsion (E1)*

|  | Matières premières | % |
|---|---|---|
| Composition C2 | CN 9800 (oligomère acrylate de silicone uréthane, Sartomer) | 92 |
|  | CN381 (oligomère de polyéther modifié amine, Sartomer) | 5 |
|  | Darocur 1173 (photoinitiateur, BASF) | 3 |
| **Total** | | 100 |

La composition C1 est ajoutée goutte à goutte à la composition C2 sous agitation à 2000 rpm avec un ration 3:7. On obtient ainsi la première émulsion (E1).

*Etape c) : Préparation de la seconde émulsion (E2)*

|  | Matières premières | % |
|---|---|---|
| Première émulsion | - | 5 |
| Composition C3 | Alginate de sodium (Sigma Aldrich) | 9,5 |
|  | Eau déionisée | 85,5 |
| **Total** | | 100 |

La composition C3 est placée sous agitation à 1 000 tpm jusqu'à complète homogénéisation puis laissée à reposer une heure à température ambiante. La première émulsion (E1) est ensuite ajoutée goutte à goutte à la composition C3 sous agitation à 1 000 tpm. On obtient ainsi la deuxième émulsion (E2).

*Etape d) : Affinage en taille de la seconde émulsion*

La seconde émulsion polydisperse (E2) obtenue à l'étape précédente est agitée à 1 000 tpm pendant 10 minutes. On obtient ainsi une émulsion monodisperse (E3).

*Etape e) : Réticulation de l'enveloppe des capsules*

La seconde émulsion monodisperse (E3) obtenue à l'étape précédente est irradiée pendant 10 minutes à l'aide d'une source de lumière UV (Dymax LightBox ECE 2000) ayant une intensité lumineuse maximale de 0,1 W/cm$^2$ à une longueur d'onde de 365 nm.

Les microcapsules obtenues présentent une bonne distribution de taille, à savoir une taille moyenne de 8,7 $\mu$m et leur distribution de taille présente un écart-type de 2,1 $\mu$m soit 24%.

Par ailleurs, la qualité d'encapsulation du chlorure de calcium avec les microcapsules selon l'exemple 1 a été étudiée par suivi de la viscosité de la suspension de capsules pendant 20 jours à température ambiante. On constate que la viscosité ne subit pas d'augmentation significative, indiquant l'absence de fuite du chlorure de calcium à l'extérieur des capsules où il provoquerait la gélification de l'alginate. Les microcapsules de l'exemple 1 s'avèrent donc particulièrement adaptées pour encapsuler efficacement une substance hydrosoluble sous forme de particules.

**Revendications**

1.   Procédé de préparation de microcapsules solides comprenant les étapes suivantes :

a) la préparation d'une composition C1, comprenant au moins une substance hydrosoluble ou hydrophile dispersée dans une phase hydrophobe, ladite substance ayant une solubilité dans l'eau, mesurée à température ambiante, à 25°C ± 2°C, et à pression ambiante, à 0,1013 MPa (1 013 mbar), au moins égale à 1 g/L,

b) l'addition goutte à goutte sous agitation de ladite composition C1 dans une composition polymérique C2, les compositions C1 et C2 n'étant pas miscibles l'une dans l'autre, ladite composition C1 étant à une température comprise entre 0°C et 100°C,

la composition C2 comprenant au moins un monomère ou polymère, au moins un agent réticulant, et éventuellement au moins un photoinitiateur ou un catalyseur de réticulation, et étant à une température comprise entre 0°C et 100°C,

la viscosité de la composition C2 étant comprise entre 500 mPa.s et 100 000 mPa.s à 25°C, et étant de préférence supérieure à la viscosité de la composition C1,

ce par quoi on obtient une émulsion (E1) comprenant des gouttes de composition C1 dispersées dans la composition C2 ;

c) l'addition goutte à goutte sous agitation de l'émulsion (E1) dans une composition C3, les compositions C2 et C3 n'étant pas miscibles l'une dans l'autre, ladite émulsion (E1) étant à une température comprise entre 15°C et 60°C et ladite composition C3 étant à une température comprise entre 15°C et 60°C,

la viscosité de la composition C3 étant comprise entre 500 mPa.s et 100 000 mPa.s à 25°C, et étant de préférence supérieure à la viscosité de l'émulsion (E1),

ce par quoi on obtient une émulsion double (E2) comprenant des gouttes dispersées dans la composition C3 ;

d) l'application d'un cisaillement à l'émulsion (E2),

ce par quoi on obtient une émulsion double (E3) comprenant des gouttes de taille contrôlée dispersées dans la composition C3 ; et

e) la polymérisation de la composition C2, ce par quoi on obtient des microcapsules solides dispersées dans la composition C3,

les viscosités étant mesurées, pour une vitesse de cisaillement égale à 10 s$^{-1}$, au moyen d'un rhéomètre équipé d'un cône de diamètre 60 mm et d'angle 2 degrés, et d'une cellule de régulation en température réglée à 25°C.

**2.** Procédé de préparation selon la revendication 1, dans lequel la substance hydrosoluble ou hydrophile est sous forme solide à température ambiante et pression atmosphérique, en particulier sous forme de particules et/ou sous forme d'un cristal, en particulier d'un sel, de préférence de taille moyenne inférieure à 1 $\mu$m.

**3.** Procédé de préparation selon la revendication 2, dans lequel la composition C1 est préparée, soit en dispersant, dans la phase hydrophobe, au moins une substance hydrosoluble ou hydrophile solide sous forme de poudre, obtenues notamment par atomisation, soit en préparant une nanoémulsion de gouttelettes d'eau dans la phase hydrophobe.

**4.** Procédé de préparation selon l'une quelconque des revendications 2 ou 3, dans lequel la composition C1 est obtenue par broyage d'au moins une substance hydrosoluble ou hydrophile solide puis par dispersion de ladite substance broyée dans la phase hydrophobe.

**5.** Procédé de préparation selon l'une quelconque des revendications 1 à 4, dans lequel la phase hydrophobe comprend au moins une huile dont la tension interfaciale avec l'eau est comprise entre 25 mN/m et 50 mN/m, ladite tension interfaciale étant mesurée selon la méthode de l'anneau de Du Noüy.

**6.** Procédé de préparation selon la revendication 5, dans lequel l'huile est choisie parmi les huiles végétales, animales ou de synthèse.

**7.** Procédé selon l'une quelconque des revendications 1 à 6, dans lequel la composition C2 comprend de 0,001% à 70% en poids d'agent(s) réticulant(s) par rapport au poids total de ladite composition.

**8.** Procédé de préparation selon l'une quelconque des revendications 1 à 7, dans lequel l'étape d) consiste à appliquer un cisaillement contrôlé homogène à l'émulsion (E2), ladite vitesse de cisaillement appliquée étant comprise entre 1 000 s$^{-1}$ et 100 000 s$^{-1}$.

9. Procédé de préparation selon l'une quelconque des revendications 1 à 7, dans lequel, lorsque la viscosité de la composition C3 est supérieure à 2 000 mPa.s à 25°C, l'étape d) consiste à appliquer à l'émulsion (E2) une vitesse de cisaillement inférieure à 1 000 s$^{-1}$.

10. Procédé de préparation selon l'une quelconque des revendications 1 à 9, dans lequel, lorsque la composition C2 comprend un photoinitiateur, l'étape e) est une étape de photopolymérisation consistant à exposer l'émulsion (E3) à une source de lumière apte à initier la photopolymérisation de la composition C2, notamment à une source de lumière UV émettant de préférence dans la gamme de longueur d'onde comprise entre 100 nm et 400 nm, et ce en particulier pendant une durée inférieure à 15 minutes.

11. Procédé de préparation selon l'une quelconque des revendications 1 à 9, dans lequel, lorsque la composition C2 ne comprend pas de photoinitiateur, l'étape e) est une étape de polymérisation, sans exposition à une source de lumière, la durée de cette étape e) de polymérisation étant de préférence comprise entre 8 heures et 100 heures et/ou cette étape e) étant réalisée à une température comprise entre 20°C et 80°C.

12. Procédé selon l'une quelconque des revendications 1 à 11, dans lequel la composition C3 comprend en outre au moins un polymère branché, de préférence de poids moléculaire supérieur à 5 000 g.mol$^{-1}$, et/ou au moins un polymère de poids moléculaire supérieur à 5 000 g.mol$^{-1}$, et/ou des particules solides telles que des silicates.

13. Série de microcapsules solides, dans laquelle chaque microcapsule comprend :

   - un coeur comprenant une composition C1 telle que définie selon l'une quelconque des revendications 1 à 6, comprenant au moins une substance hydrosoluble ou hydrophile dispersée dans une phase hydrophobe, la substance hydrosoluble ou hydrophile étant sous forme solide à température ambiante et pression atmosphérique, et
   - une enveloppe solide encapsulant totalement à sa périphérie le coeur, ladite enveloppe solide étant obtenue de la composition C2 telle que définie dans la revendication 1, ladite composition C2 comprenant au moins un monomère ou polymère, au moins un agent réticulant, et éventuellement au moins un photoinitiateur ou un catalyseur de réticulation, et étant à une température comprise entre 0°C et 100°C,

   dans laquelle le diamètre moyen desdites microcapsules est compris entre 1 $\mu$m et 30 $\mu$m, l'épaisseur de l'enveloppe rigide est comprise entre 0,1 $\mu$m et 20 $\mu$m et l'écart-type de la distribution du diamètre des microcapsules est inférieur à 50%, en particulier inférieur à 25%, ou inférieur à 1 $\mu$m, la distribution de taille des microcapsules solides étant mesurée par technique de diffusion de la lumière comme défini dans la description.

14. Composition comprenant une série de microcapsules solides selon la revendication 13.

**Patentansprüche**

1. Verfahren zur Herstellung von festen Mikrokapseln, umfassend die folgenden Schritte:

   a) Herstellen einer Zusammensetzung C1, umfassend mindestens eine wasserlösliche oder hydrophile Substanz, dispergiert in einer hydrophoben Phase, wobei die Substanz eine Löslichkeit in Wasser, gemessen bei Raumtemperatur, bei 25 °C ± 2 °C und bei Raumdruck, bei 0,1013 MPa (1013 mbar), mindestens 1 g/L ist,
   b) tropfenweises Hinzufügen unter Rühren der Zusammensetzung C1 in eine Polymerzusammensetzung C2, wobei die Zusammensetzungen C1 und C2 nicht miteinander mischbar sind, wobei die Zusammensetzung C1 eine Temperatur zwischen 0 °C und 100 °C aufweist,

   die Zusammensetzung C2 umfassend mindestens ein Monomer oder Polymer, mindestens ein Vernetzungsmittel und optional mindestens einen Photoinitiator oder einen Vernetzungskatalysator, und auf einer Temperatur zwischen 0 °C und 100 °C ist,
   wobei die Viskosität der Zusammensetzung C2 bei 25 °C zwischen 500 mPa.s und 100.000 mPa.s liegt und vorzugsweise höher ist als die Viskosität der Zusammensetzung C1,
   wodurch eine Emulsion (E1) erlangt wird, umfassend Tropfen der Zusammensetzung C1, dispergiert in der Zusammensetzung C2,

   c) tropfenweises Hinzufügen unter Rühren der Emulsion (E1) in eine Zusammensetzung C3, wobei die Zusammensetzungen C2 und C3 nicht miteinander mischbar sind, wobei die Emulsion (E1) auf einer Temperatur zwischen 15 °C und 60 °C ist und die Zusammensetzung C3 auf einer Temperatur zwischen 15 °C und 60 °C ist,

wobei die Viskosität der Zusammensetzung C3 bei 25 °C zwischen 500 mPa.s und 100.000 mPa.s liegt und vorzugsweise höher ist als die Viskosität der Emulsion (E1),
wodurch eine Doppelemulsion (E2) erlangt wird, umfassend Tropfen, die in der Zusammensetzung C3 dispergiert sind;

d) Anwenden einer Scherkraft auf die Emulsion (E2),
wodurch eine Doppelemulsion (E3) erlangt wird, umfassend Tropfen kontrollierter Größe, dispergiert in der Zusammensetzung C3; und
e) Polymerisieren der Zusammensetzung C2, wodurch feste Mikrokapseln dispergiert in der Zusammensetzung C3 erlangt werden,

wobei die Viskositäten bei einer Schergeschwindigkeit von 10 s$^{-1}$ mittels eines Rheometers gemessen werden, das ausgestattet ist mit einem Kegel mit einem Durchmesser von 60 mm und einem Winkel von 2 Grad und einer Temperaturregelzelle, die auf 25 °C eingestellt ist, gemessen wird.

2. Verfahren zur Herstellung nach Anspruch 1, wobei die wasserlösliche oder hydrophile Substanz bei Raumtemperatur und Atmosphärendruck in fester Form ist, insbesondere in Form von Partikeln und/oder in Form eines Kristalls, insbesondere eines Salzes, vorzugsweise mit einer mittleren Größe von weniger als 1 μm.

3. Verfahren zur Herstellung nach Anspruch 2, wobei die Zusammensetzung C1 entweder durch Dispergieren mindestens einer festen wasserlöslichen oder hydrophilen Substanz in Pulverform, die insbesondere durch Zerstäubung erlangt wird, in der hydrophoben Phase oder durch Herstellen einer Nanoemulsion von Wassertröpfchen in der hydrophoben Phase hergestellt wird.

4. Verfahren zur Herstellung nach einem der Ansprüche 2 oder 3, wobei die Zusammensetzung C1 durch Zerkleinern mindestens einer festen wasserlöslichen oder hydrophilen Substanz und anschließendes Dispergieren der zerkleinerten Substanz in der hydrophoben Phase erlangt wird.

5. Verfahren zur Herstellung nach einem der Ansprüche 1 bis 4, wobei die hydrophobe Phase mindestens ein Öl umfasst, dessen Grenzflächenspannung mit Wasser zwischen 25 mN/m und 50 mN/m liegt, wobei die Grenzflächenspannung gemäß der Methode Du-Noüy-Ring gemessen wird.

6. Verfahren zur Herstellung nach Anspruch 5, wobei das Öl aus pflanzlichen, tierischen oder synthetischen Ölen ausgewählt ist.

7. Vorrichtung nach einem der Ansprüche 1 bis 6, wobei die Emulsion C2 0,001 Gewichts-% bis 70 Gewichts-% anionische(s) Polymer(e), bezogen auf das Gesamtgewicht der Emulsion, umfasst.

8. Verfahren zur Herstellung nach einem der Ansprüche 1 bis 7, wobei Schritt d) darin besteht, eine homogene kontrollierte Scherung auf die Emulsion (E2) anzuwenden, wobei die angewandte Schergeschwindigkeit zwischen 1.000 s$^{-1}$ und 100.000 s$^{-1}$ liegt.

9. Verfahren zur Herstellung nach einem der Ansprüche 1 bis 7, wobei, wenn die Viskosität der Zusammensetzung C3 bei 25 °C größer ist als 2.000 mPa.s, Schritt d) darin besteht, auf die Emulsion (E2) eine Schergeschwindigkeit von weniger als 1.000 s$^{-1}$ anzuwenden.

10. Verfahren zur Herstellung nach einem der Ansprüche 1 bis 9, wobei, wenn die Zusammensetzung C2 einen Photoinitiator umfasst, Schritt e) ein Photopolymerisationsschritt ist, der darin besteht, die Emulsion (E3) einer Lichtquelle auszusetzen, die geeignet ist, die Photopolymerisation der Zusammensetzung C2 einzuleiten, insbesondere einer UV-Lichtquelle, die vorzugsweise im Wellenlängenbereich zwischen 100 nm und 400 nm emittiert, und dies insbesondere über eine Dauer von weniger als 15 Minuten.

11. Verfahren zur Herstellung nach einem der Ansprüche 1 bis 9, wobei, wenn die Zusammensetzung C2 keinen Fotoinitiator umfasst, Schritt e) ein Polymerisationsschritt ohne Aussetzung an eine Lichtquelle ist, wobei die Dauer dieses Polymerisationsschritts e) vorzugsweise zwischen 8 Stunden und 100 Stunden liegt und/oder dieser Schritt e) bei einer Temperatur zwischen 20 °C und 80 °C liegt.

12. Verfahren nach einem der Ansprüche 1 bis 11, wobei die Zusammensetzung C3 ferner mindestens ein verzweigtes Polymer, vorzugsweise mit einem Molekulargewicht von mehr als 5.000 g.mol$^{-1}$, und/oder mindestens ein Polymer mit einem Molekulargewicht von mehr als 5.000 g.mol$^{-1}$, und/oder feste Partikel, wie beispielsweise Silikate, umfasst.

13. Reihe von festen Mikrokapseln, wobei jede Mikrokapsel Folgendes umfasst:

- einen Kern, umfassend eine Zusammensetzung C1 wie definiert in einem der Ansprüche 1 bis 6, umfassend mindestens eine wasserlösliche oder hydrophile Substanz, die in einer hydrophoben Phase dispergiert ist, wobei die wasserlösliche oder hydrophile Substanz bei Raumtemperatur und Atmosphärendruck in fester Form ist, und
- eine feste Hülle, die den Kern an ihrer Peripherie vollständig einkapselt, wobei die feste Hülle aus der Zusammensetzung C2, wie definiert in Anspruch 1, erlangt wird, die Zusammensetzung C2 umfassend mindestens ein Monomer oder Polymer, mindestens ein Vernetzungsmittel und optional mindestens einen Photoinitiator oder einen Vernetzungskatalysator, und auf einer Temperatur zwischen 0 °C und 100 °C ist,

wobei der mittlere Durchmesser der Mikrokapseln zwischen 1 μm und 30 μm liegt, die Stärke der festen Hülle zwischen 0,1 μm und 20 μm liegt und die Standardabweichung der Durchmesserverteilung der Mikrokapseln kleiner als 50 %, insbesondere kleiner als 25 %, oder kleiner als 1 μm ist, wobei die Größenverteilung der festen Mikrokapseln durch Lichtstreuungstechnik, wie definiert in der Beschreibung, gemessen wird.

14. Zusammensetzung, umfassend eine Reihe von festen Mikrokapseln nach Anspruch 13.

**Claims**

1. A method for preparing solid microcapsules that comprises of the following steps:

a) the preparation of a composition C1, comprising at least one water-soluble or hydrophilic substance dispersed in a hydrophobic phase, said substance having a solubility in water, measured at ambient temperature, at T = 25°C ± 2°C, and at ambient pressure, at 0.1013 MPa (or 1,013 mbar), at least equal to 1 g/L;
b) the dropwise addition, under agitation, of said composition C1 in a polymeric composition C2, the compositions C1 and C2 being immiscible with each other, said composition C1 being at a temperature comprised from 0°C to 100°C,

the composition C2 comprising at least one monomer or polymer, at least one crosslinking agent, and optionally at least one photoinitiator or a crosslinking catalyst, and being at a temperature comprised from 0°C to 100°C;
the viscosity of the composition C2 being comprised between 500 mPa.s and 100 000 mPa.s at 25°C, and preferably being greater than the viscosity of the composition C1, whereby an emulsion (E1) is obtained comprising droplets of the composition C1 dispersed in the composition C2;

c) the dropwise addition, under agitation, of the emulsion (E1) in a composition C3, the compositions C2 and C3 being immiscible with each other, said emulsion (E1) being at a temperature comprised from 15°C to 60°C and said composition C3 being at a temperature comprised between 15°C and 60°C;

the viscosity of the composition C3 being comprised between 500 mPa.s and 100,000 mPa.s at 25°C, and preferably being greater than the viscosity of the emulsion (E1);
whereby a double emulsion (E2) is obtained comprising droplets dispersed in the composition C3;

d) the application of a shear to the emulsion (E2);
whereby a double emulsion (E3) is obtained comprising size controlled droplets dispersed in the composition C3; and
e) the polymerisation of the composition C2, whereby solid microcapsules dispersed in the composition C3 are obtained,

the viscosities being measured, for a shear rate equal to 10 s$^{-1}$, by means of a rheometer, equipped with a cone having 60 mm diameter and 2 degrees cone angle, and a temperature control cell set at 25°C.

2. The method according to claim 1, in which the water-soluble or hydrophilic substance is in solid form at ambient temperature and atmospheric pressure, in particular in the form of particles and / or in the form of a crystal, in particular of a salt, preferably having an average size of less than 1 $\mu$m.

3. The method according to claim 2, in which the composition C1 is prepared, either by dispersing, in the hydrophobic phase, at least one water-soluble or hydrophilic solid substance in the form of a powder, obtained in particular by atomisation, or by preparing a nanoemulsion of droplets of water in the hydrophobic phase.

4. The method according to any one of claims 2 or 3, in which the composition C1 is obtained by means of grinding at least one solid water-soluble or hydrophilic substance and then dispersing the said ground substance in the hydrophobic phase.

5. The method according to any one of claims 1 to 4, in which the hydrophobic phase comprises at least one oil whose interfacial tension with water is comprised between 25 mN/m and 50 mN/m, said interfacial tension being measured according to the Du Noüy ring method.

6. The method according to claim 5, in which the oil is selected from among plant, animal or synthetic oils.

7. The method according to any one of claims 1 to 6, in which the composition C2 comprises from 0.001% to 70% by weight of crosslinking agent(s) in relation to the total weight of said composition.

8. The method according to any one of claims 1 to 7, in which the step d) consists in applying a homogeneous controlled shear to the emulsion (E2), with the said shear rate applied comprised between 1,000 s$^{-1}$ and 100,000 s$^{-1}$.

9. The method according to any one of claims 1 to 7, in which when the viscosity of the composition C3 is greater than 2,000 mPa.s at 25°C, the step d) consists in applying to the emulsion (E2) a shear rate of less than 1,000 s$^{-1}$.

10. The method according to any one of claims 1 to 9, in which, when the composition C2 comprises a photoinitiator, the step e) is a step of photopolymerisation consisting in exposing the emulsion (E3) to a light source that is capable of initiating the photopolymerisation of the composition C2, in particular to a UV light source emitting preferably in the wavelength range of between 100 nm and 400 nm, and this being in particular for a time period of less than 15 minutes.

11. The method according to any one of claims 1 to 9, in which, when the composition C2 does not comprise a photoinitiator, the step e) is a polymerisation step, without exposure to a light source, with the duration of this step e) of polymerisation preferably being comprised between 8 hours and 100 hours and/or this step e) being carried out at a temperature comprised between 20°C and 80°C.

12. The method according to any one of claims 1 to 11, in which the composition C3 comprises in addition at least one branched polymer, preferably having a molecular weight greater than 5,000 g.mol$^{-1}$, and / or at least one polymer having a molecular weight greater than 5,000 g.mol$^{-1}$, and / or solid particles such as silicates.

13. A series of solid microcapsules, susceptible to be obtained with the method according to any one of claims 1 to 12, in which each microcapsule includes:

- a core comprising of a composition C1 as defined according to any one of claims 1 to 6, comprising at least one water-soluble or hydrophilic substance dispersed in a hydrophobic phase, the water-soluble or hydrophilic substance being in solid form at ambient temperature and atmospheric pressure; and
- a solid enveloping shell that completely encapsulates at its periphery the core, said solid enveloping shell being obtained from the composition C2 as defined in claim 1, said composition C2 comprising at least one monomer or polymer, at least one crosslinking agent, and optionally at least one photoinitiator or a crosslinking catalyst, and being at a temperature comprised from 0°C to 100°C;

in which the mean diameter of the said microcapsules is comprised between 1 $\mu$m and 30 $\mu$m, the thickness of the rigid enveloping shell is comprised between 0.1 $\mu$m and 20 $\mu$m and the standard deviation of the distribution of the diameter of microcapsules is less than 50%, in particular less than 25%, or less than 1 $\mu$m, the distribution of the size of the solid microcapsules being measured by the light diffusion method as defined in the specification.

14. A composition comprising a series of solid microcapsules according to claim 13.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004234738 A1
- US 2009289216 A1
- US 6335315 B
- US 587714 A
- FR 3004641
- EP 15306428 A
- US 5938581 A
- FR 1661787

**Littérature non-brevet citée dans la description**

- **G. LI BASSI**. Les photoinitiateurs dans la réticulation des revêtements. *Double Liaison - Chimie des Peintures*, November 1985 (361), 34-41
- **HENRI STRUB**. Applications industrielles de la polymérisation photoinduite. *L'Actualité Chimique*, February 2000, 5-13
- **MARC, J.M. ABADIE**. Photopolymères : considérations théoriques et réaction de prise. *Double Liaison - Chimie des Peintures*, 1992 (435-436), 28-34
- **LIU et al.** *Polymer Chemistry*, 2013, vol. 4, 3431-3443